(19) Europäisches Patentamt
European Patent Office
Office européen des brevets

(11) EP 4 265 390 B1

(12) **EUROPEAN PATENT SPECIFICATION**

(45) Date of publication and mention of the grant of the patent:
**30.09.2026 Bulletin 2026/40**

(21) Application number: **21906700.6**

(22) Date of filing: **16.12.2021**

(51) International Patent Classification (IPC):
***B29C 45/00** (2006.01)* ***C08L 67/02** (2006.01)*
***C08L 83/10** (2006.01)*

(52) Cooperative Patent Classification (CPC):
(C-Sets available)
**C08L 67/025; C08L 83/10;** C08G 77/442 (Cont.)

(86) International application number:
**PCT/JP2021/046573**

(87) International publication number:
**WO 2022/131340 (23.06.2022 Gazette 2022/25)**

(54) **THERMOPLASTIC POLYESTER ELASTOMER RESIN COMPOSITION AND MOLDED OBJECT**

THERMOPLASTISCHE POLYESTERELASTOMERHARZZUSAMMENSETZUNG UND FORMKÖRPER

COMPOSITION DE RÉSINE ÉLASTOMÈRE DE POLYESTER THERMOPLASTIQUE ET OBJET MOULÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.12.2020 JP 2020210517**

(43) Date of publication of application:
**25.10.2023 Bulletin 2023/43**

(73) Proprietor: **TOYOBO MC Corporation**
**Osaka-shi, Osaka 530-0001 (JP)**

(72) Inventor: **NAKASHIMA Ayano**
**Otsu-shi, Shiga 520-0292 (JP)**

(74) Representative: **Müller-Boré & Partner Patentanwälte PartG mbB**
**Friedenheimer Brücke 21**
**80639 München (DE)**

(56) References cited:
**WO-A1-2019/168007**
**JP-A- 2003 012 989**
**JP-A- 2010 106 597**
**JP-A- 2016 079 228**

EP 4 265 390 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 67/025, C08L 51/08;**
**C08L 67/025, C08L 83/10**

## Description

Technical Field of the Invention

The present invention relates to a thermoplastic polyester elastomer resin composition capable of providing a molded product having good appearance and really excellent abrasion resistance.

Background Art

In order to improve the abrasion resistance of a resin composition, a method of adding, as a lubricant, a long-chain organic acid compound such as an organic acid ester, an organic acid salt, and an organic acid amide, or silicone oil has conventionally been known. In order for particularly a soft composition having a durometer type D hardness of 60 or less to exert sufficient abrasion resistance, it is necessary to blend a large amount of a lubricant in the composition. Blending a large amount of a lubricant, however, easily causes problems such as bleed and bloom because the lubricant, which does not have good dispersibility and is not completely compatible with a resin, is separated over time and concentrated near the surface. In addition, a long-chain organic acid compound is easily changed in quality at high temperatures and has problems of easily causing discoloration called a burn or a scorch or generating foreign matter during melt molding.

On the other hand, also known is a method of improving the abrasion properties by adding solid particles, such as a silicone powder and a Teflon (Registered Trademark) powder, that are not melted even at high temperatures. The solid particles, however, act as a filler and therefore adversely affect the moldability and the surface properties. In addition, the solid particles are, due to less adhesion with a resin component of the composition, easily peeled from the interface, and using a large amount of the solid particles therefore causes a problem of decreasing the strength of the composition itself.

In order to address these problems, a copolymer has been developed that includes both a structure portion going well with a resin component and a structure portion improving the abrasion properties, and application of such a copolymer to various thermoplastic resins is being attempted. However, while giving an effect of improving the heat resistance and the weather resistance, such a copolymer often gives disadvantages of rather deteriorating the melt flowability and the moldability. The reason for this phenomenon is, for example, considered to be that a graft copolymer or a block copolymer having different structures in combination acts as a pseudo-crosslinking point of the thermoplastic resin.

Patent Document 1 discloses an invention relating to a thermoplastic elastomer composition comprising, with respect to a thermoplastic polyester elastomer, an epoxy-based thickener containing a silicone-modified (meth)acrylic polymer and styrene.

Prior Art Document

Patent Document

Patent Document 1: Japanese Patent Application Laid-Open (JP-A) No. 2016-79228

Disclosure of the Invention

Problem that the Invention is to Solve

Patent Document 1 proposes blending a silicone-modified acrylic polymer so as to solve the problems described above. It, however, has been found that the appearance of a molded product made from the thermoplastic polyester elastomer composition is not enough satisfying. An object of the present invention is to provide a thermoplastic polyester elastomer resin composition capable of providing a molded product having further good appearance and really excellent abrasion resistance, and a molded product made therefrom.

Means for Solving the Problem

The inventor of the present invention has found that both the appearance and the abrasion resistance can sufficiently be attained by blending a specific silicone-acrylic copolymer with respect to a thermoplastic polyester elastomer in order to achieve the objective described above, and the present invention has been completed.

Thus, the present invention is constituted from the following (1) to (4).

(1) A thermoplastic polyester elastomer resin composition comprising a thermoplastic polyester elastomer (A) and a silicone-acrylic copolymer (B) ; wherein the thermoplastic polyester elastomer (A) contains a hard segment and a soft

segment bonded to each other, wherein the hard segment comprises a polyester formed from an aromatic dicarboxylic acid and an aliphatic and/or alicyclic diol as constituent components, wherein the soft segment is at least one member selected from the group consisting of an aliphatic polyether, an aliphatic polyester, and an aliphatic polycarbonate; and wherein, in a molded product obtained by injection molding of the thermoplastic polyester elastomer resin composition, the silicone-acrylic copolymer (B) dispersed in the thermoplastic polyester elastomer (A) forming a matrix has an average dispersion area of 0.3 $\mu m^2$ or less.

(2) The thermoplastic polyester elastomer resin composition according to (1), wherein the silicone-acrylic copolymer (B) is a graft copolymer wherein a main skeleton is silicone and wherein an acrylic polymer is bonded to the main skeleton as a side-chain.

(3) The thermoplastic polyester elastomer resin composition according to (1) or (2), wherein the silicone-acrylic copolymer (B) has a weight loss percentage at 250°C measured by thermogravimetric analysis (TGA) of 3.3% or more.

(4) A molded product obtained from the thermoplastic polyester elastomer resin composition comprising a thermoplastic polyester elastomer (A) and a silicone-acrylic copolymer (B); wherein the thermoplastic polyester elastomer (A) contains a hard segment and a soft segment bonded to each other, wherein the hard segment comprises a polyester formed from an aromatic dicarboxylic acid and an aliphatic and/or alicyclic diol as constituent components, wherein the soft segment is at least one member selected from the group consisting of an aliphatic polyether, an aliphatic polyester, and an aliphatic polycarbonate; and wherein, in the molded product, the silicone-acrylic copolymer (B) dispersed in the thermoplastic polyester elastomer (A) forming a matrix has an average dispersion area of 0.3 $\mu m^2$ or less.

Effects of the Invention

The thermoplastic polyester elastomer resin composition according to the present invention has good moldability. The molded product obtained from the thermoplastic polyester elastomer resin composition has good appearance and really excellent abrasion resistance, and can therefore be suitably used for a repetitively abraded member such as an automobile interior part.

Mode for Carrying Out the Invention

Hereinafter, the thermoplastic polyester elastomer resin composition of the present invention will be illustrated in detail.

The thermoplastic polyester elastomer resin composition according to the present invention is a thermoplastic polyester elastomer resin composition comprising a thermoplastic polyester elastomer (A) and a silicone-acrylic copolymer (B), wherein, in a molded product obtained by injection molding of the thermoplastic polyester elastomer resin composition, the silicone-acrylic copolymer (B) dispersed in the thermoplastic polyester elastomer (A) forming a matrix has an average dispersion area of 0.3 $\mu m^2$ or less.

The thermoplastic polyester elastomer (A) contains a hard segment and a soft segment bonded to each other, wherein the hard segment comprises a polyester formed from an aromatic dicarboxylic acid and an aliphatic and/or alicyclic diol as constituent components, and wherein the soft segment is at least one member selected from the group consisting of an aliphatic polyether, an aliphatic polyester, and an aliphatic polycarbonate.

The thermoplastic polyester elastomer (A) preferably contains, as main constituent components, a hard segment that comprises a crystalline polyester formed from an aromatic dicarboxylic acid and an aliphatic or alicyclic diol, and a soft segment that is at least one member selected from the group consisting of an aliphatic polyether, an aliphatic polyester, and an aliphatic polycarbonate. The thermoplastic polyester elastomer (A) preferably has a content of the soft-segment component of 95 to 5 mass%, more preferably 90 to 10 mass%, further preferably 85 to 15 mass%, and particularly preferably 75 to 25 mass%. The thermoplastic polyester elastomer (A) may contain in combination two or more soft-segment components at different contents, with the total contents adjusted to the content of the soft segment described above.

In the thermoplastic polyester elastomer (A), as to the aromatic dicarboxylic acid forming the polyester of the hard segment, an ordinary aromatic dicarboxylic acid may be widely used without any particular limitation, but terephthalic acid or a naphthalene dicarboxylic acid is desirable as a main aromatic dicarboxylic acid. The naphthalene dicarboxylic acid is preferably 2,6-naphthalene dicarboxylic acid among isomers of the naphthalene dicarboxylic acid. Examples of other acid component include: aromatic dicarboxylic acids such as a diphenyl dicarboxylic acid, isophthalic acid, and 5-sodium sulfoisophthalic acid; alicyclic dicarboxylic acids such as a cyclohexane dicarboxylic acid and tetrahydrophthalic anhydride; and aliphatic dicarboxylic acids such as succinic acid, glutaric acid, adipic acid, azelaic acid, sebacic acid, dodecanedioic acid, dimer acid, and hydrogenated dimer acid. These acid components may be used in an amount which does not greatly lower the melting point of the resin. The amount of the other acid component is less than 35 mol%,

preferably less than 30 mol% of the total acid components.

In the thermoplastic polyester elastomer (A), as to the aliphatic or alicyclic diol forming the polyester of the hard segment, a general aliphatic or alicyclic diol may be widely used without any particular limitation, but it is desired that the aliphatic or alicyclic diol is mainly an alkylene glycol having 2 to 8 carbon atoms. Specific examples of the alkylene glycol include ethylene glycol, 1,3-propylene glycol, 1,4-butanediol, 1,6-hexanediol, and 1,4-cyclohexanedimethanol. The most preferable ones are 1,4-butanediol and 1,4-cyclohexanedimethanol.

As to a component forming the polyester of the hard segment, a butylene terephthalate unit (a unit formed from terephthalic acid and 1,4-butanediol) or a butylene naphthalate unit (a unit formed from 2,6-naphthalene dicarboxylic acid and 1,4-butanediol) is preferred in terms of physical properties, moldability, and cost performance.

The soft segment of the thermoplastic polyester elastomer (A) to be used in the present invention is at least one member selected from the group consisting of an aliphatic polyether, an aliphatic polyester, and an aliphatic polycarbonate.

Examples of the aliphatic polyether include poly(ethylene oxide)glycol, poly(propylene oxide)glycol, poly(tetramethylene oxide) glycol, poly(hexamethylene oxide) glycol, poly (trimethylene oxide) glycol, a copolymer of ethylene oxide and propylene oxide, an ethylene oxide adduct of poly(propylene oxide)glycol, and a copolymer of ethylene oxide and tetrahydrofuran. Among these examples, poly (tetramethylene oxide)glycol and an ethylene oxide adduct of poly(propylene oxide)glycol are preferred in terms of elastic properties.

Examples of the aliphatic polyester include poly(ε-caprolactone), polyenantholactone, polycaprylolactone, and polybutylene adipate. Among these examples, poly(ε-caprolactone) and polybutylene adipate are preferred in terms of elastic properties.

The aliphatic polycarbonate is preferably mainly formed from an aliphatic diol residue having 2 to 12 carbon atoms. Examples of this aliphatic diol include ethylene glycol, 1,3-propylene glycol, 1,4-butanediol, 1,5-pentanediol, 1,6-hexanediol, 1,8-octanediol, 2,2-dimethyl-1,3-propanediol, 3-methyl-1,5-pentanediol, 2,4-diethyl-1,5-pentanediol, 1,9-nonanediol, and 2-methyl-1,8-octanediol. Particularly, an aliphatic diol having 5 to 12 carbon atoms is preferred in terms of softness and low-temperature properties of the thermoplastic polyester elastomer obtained. These components may be used singly or in combination of two or more thereof according to the necessity on the basis of the case examples described below.

As to the aliphatic polycarbonate diol that forms the soft segment of the thermoplastic polyester elastomer (A) used in the present invention and has good low-temperature properties, one having a low melting point (for example, 70°C or lower) and a low glass transition temperature is preferred. An aliphatic polycarbonate diol which is formed from 1,6-hexanediol and used to form a soft segment of a thermoplastic polyester elastomer generally has a low glass transition temperature of around -60°C and a melting point of around 50°C, and therefore has good low-temperature properties. As to another example, an aliphatic polycarbonate diol obtained by copolymerizing the aliphatic polycarbonate diol described above with an appropriate amount of, for example, 3-methyl-1,5-pentanediol has a glass transition point slightly higher than the glass transition point of the original aliphatic polycarbonate diol, but has a lower melting point or is amorphous, and therefore corresponds to an aliphatic polycarbonate diol having good low-temperature properties. As to another example, an aliphatic polycarbonate diol formed from 1,9-nonanediol and 2-methyl-1,8-octanediol has a melting point of about 30°C and a glass transition temperature of around -70°C that are sufficiently low, and therefore corresponds to an aliphatic polycarbonate diol having good low-temperature properties.

The soft segment of the thermoplastic polyester elastomer (A) used in the present invention is preferably an aliphatic polyether from the viewpoint of solving the problems of the present invention.

The thermoplastic polyester elastomer (A) used in the present invention is preferably a copolymer formed from terephthalic acid, 1,4-butanediol, and poly(tetramethylene oxide) glycol as main components. In the dicarboxylic acid components forming the thermoplastic polyester elastomer (A), the content of the terephthalic acid is preferably 40 mol% or more, more preferably 70 mol% or more, further preferably 80 mol% or more, and particularly preferably 90 mol% or more. In the glycol components forming the thermoplastic polyester elastomer (A), the total of the 1,4-butanediol and the poly (tetramethylene oxide) glycol is preferably 40 mol% or more, more preferably 70 mol% or more, further preferably 80 mol% or more, and particularly preferably 90 mol% or more.

The poly(tetramethylene oxide)glycol preferably has a number average molecular weight of 500 to 4000. The poly (tetramethylene oxide)glycol having a number average molecular weight of less than 500 may be sometimes less likely to exert elastomer properties. On the other hand, the poly (tetramethylene oxide)glycol having a number average molecular weight of more than 4000 may have lower compatibility with the hard-segment components, making it difficult to achieve block copolymerization. The poly(tetramethylene oxide)glycol more preferably has a number average molecular weight of 800 to 3000, and further preferably has a number average molecular weight of 1000 to 2500.

The thermoplastic polyester elastomer (A) preferably has a reduced viscosity of 0.5 to 3.5 dl/g, and more preferably has a reduced viscosity of 1.0 to 3.0 dl/g from the viewpoint of making the present invention exhibit maximum effects.

The thermoplastic polyester elastomer (A) can be produced by a conventionally known method. It is possible to

adopt, for example, a method of subjecting a lower alcohol diester of a dicarboxylic acid, an excessive amount of a low-molecular-weight glycol, and a soft-segment component to a transesterification reaction in the presence of a catalyst and subjecting the obtained reaction product to polycondensation, or a method of subjecting a dicarboxylic acid, an excessive amount of a glycol, and a soft-segment component to an esterification reaction in the presence of a catalyst and subjecting the obtained reaction product to polycondensation.

The silicone-acrylic copolymer (B) has a structure comprising at least one silicone (polysiloxane) portion and at least one (meth)acrylic acid polymer portion. As to the copolymer having such a structure, those having various structures and properties are known, such as an (acrylates/ethylhexyl acrylate/dimethicone methacrylate) copolymer (trade name: KP578), a wax-type (acrylates/stearyl acrylate/dimethicone methacrylate) copolymer (trade name: KP561P), and an (acrylates/behenyl acrylate/dimethicone methacrylate) copolymer (trade name: KP562P) manufactured by Shin-Etsu Silicone Co., Ltd., and CHALINE manufactured by Nissin Chemical Industry Co., Ltd.

Among these examples, the silicone-acrylic copolymer (B) is preferably a graft copolymer wherein a main skeleton is silicone (polysiloxane) and wherein an acrylic polymer is bonded to the main skeleton as a side-chain. In the silicone-acrylic copolymer (B) having such a configuration, the acrylic polymer portion having excellent compatibility with a matrix resin acts as a branched chain, whereby an entanglement with the resin is improved, which results in less bleeding out, and excellent dispersibility during kneading.

The acrylic polymer is a (co)polymerized product of a (meth)acrylic acid ester and/or a (meth)acrylic acid hydroxyalkyl ester. It is possible to adjust the number of graft points of the acrylic polymer by appropriately blending a silane monomer having an unsaturated group when the polysiloxane portion is produced. In the silicone-acrylic copolymer (B), the polysiloxane portion and the acrylic polymer portion may be linear or branched. The (meth) acrylic acid ester and the (meth)acrylic acid hydroxyalkyl ester may be used in combination, or only one thereof may be used.

The silicone-acrylic copolymer (B) may partially be modified and may have a core-shell form.

The silicone-acrylic copolymer (B) having a higher ratio of the silicone (polysiloxane) portion tends to improve the sliding properties of the composition, but the silicone-acrylic copolymer (B) having a higher ratio of the acrylic polymer tends to improve the dispersibility thereof in the composition. From these viewpoints, the polymerization ratio (silicone/acrylic polymer) between the silicone and the acrylic polymer is preferably 5/95 to 85/15, more preferably 30/70 to 80/20 and further preferably 60/40 to 75/25, by mass ratio.

The silicone-acrylic copolymer (B) preferably has a particle shape when being solid at ordinary temperatures (23°C). The particles preferably have an area-based average particle size of 0.5 to 120 μm, more preferably have an area-based average particle size of 1 to 100 μm, further preferably have an area-based average particle size of 5 to 80 μm, and particularly preferably have an area-based average particle size of 20 to 50 μm. The shape of the particles can directly be observed through electron microscope observation. Any 30 particles (at least) are selected and measured for the major axis and the minor axis and standardized into ovals to calculate the sectional area thereof, and the area-based average particle size can thereby be calculated. The silicone-acrylic copolymer (B) having such a particle shape is easily handled as pellets or a powder raw material, and when kneaded in the composition according to the present invention, the silicone-acrylic copolymer (B) is, due to its good dispersibility, quickly dispersed in the composition, bringing about good sliding properties to the composition.

The thermoplastic polyester elastomer resin composition according to the present invention is characterized in that, in a molded product obtained by injection molding of the thermoplastic polyester elastomer resin composition according to the present invention, the silicone-acrylic copolymer (B) dispersed in the thermoplastic polyester elastomer (A) forming a matrix has an average dispersion area of 0.3 $\mu m^2$ or less. Now described is means for achieving such feature.

The injection molding is a molding method that causes large orientation at a shear orientation layer. Generally, domains (particles) are extended during injection and the domain size in the molded product tends to be gradually decreased toward a surface layer.

When the difference in surface energy is large between the matrix (resin) and the domains (particles), the domains (particles) are extended during injection. However, the domains (particles) are easily reaggregated if the matrix is a thermoplastic polyester elastomer having a low solidification rate (a low cooling crystallization temperature Tc2). Therefore, when the domains have a long molecular chain and a large surface energy (a large difference in energy from the resin), the domains easily return to their original size and does not disperse finely, whereby easily generating appearance defects. Thus, the particles desirably have a low molecular weight in order to improve the compatibility with the resin (reduce the difference in energy) and resolve the core-shell structure of the particles for fine dispersion during injection molding.

That is, the silicone-acrylic copolymer (B) preferably has a low molecular weight from the viewpoint of the effect of facilitating the fine dispersion and improving the abrasion resistance. The silicone-acrylic copolymer (B) having an excessively large molecular weight may have ununiform dispersibility, whereby easily generating undispersed coarse particle-size particles. As a result, the ratio of the particles of the silicone-acrylic copolymer (B) present on the surface of the molded product may decrease, and thus the effect itself of improving the abrasion resistance may be less likely to be exerted. Further, the increase of the number of the particles having a coarse particle size and the increase of the average

dispersion area become causes of appearance defects such as whitening in the molded product.

Examples of the graft copolymer wherein a main skeleton is silicone (polysiloxane) and wherein an acrylic polymer is bonded to the main skeleton as a side-chain include CHALINE R-175S, CHALINE R-170S and CHALINE R-170HS manufactured by Nissin Chemical Industry Co., Ltd.

Between graft copolymers having the same configuration, the measure of molecular weight is very important as described above. As to the measure of this molecular weight, the weight loss percentage at 250°C measured by thermogravimetric analysis (TGA) is used.

A high molecular-weight compound generally has higher intermolecular attraction forces along with an increase of the molecular weight thereof and therefore becomes less likely to cause deformation attributed to heat, showing a tendency to increase the softening temperature and the thermal decomposition temperature. The silicone-acrylic copolymer (B) used in the present application has a softening point near 100°C and a thermal decomposition temperature near 250°C. Accordingly, the difference in molecular weight can simply be understood by the weight loss percentage at these temperatures.

Table 1 shows the weight loss percentage (%) of CHALINE R-175S, CHALINE R-170S and CHALINE R-170HS at the temperatures as results of thermogravimetric analysis (TGA). The measuring conditions in the TGA are as described later in Examples.

[Table 1]

| Temperature [°C] | R-175S [%] | R-170S [%] | R-170HS [%] |
|---|---|---|---|
| 25 | 0.0 | 0.0 | 0.0 |
| 50 | 0.2 | 0.1 | 0.1 |
| **100** | **0.9** | **0.6** | **0.5** |
| 150 | 1.7 | 1.3 | 1.1 |
| 200 | 2.3 | 1.9 | 1.6 |
| **250** | **3.5** | **3.2** | **3.2** |
| 300 | 7.0 | 6.9 | 6.5 |

The weight loss percentage at 100°C is 0.9% for R-175S, 0.6% for R-170S, and 0.5% for R-170HS. R-175S has the lowest molecular weight, and the order of molecular weight can be said as R-175S < R-170S < R-170HS.

The weight loss percentage at 250°C is 3.5% for R-175S, 3.2% for R-170S, and 3.2% for R-170HS. R-175S has the lowest molecular weight, and the order of molecular weight can be said as R-175S < R-170S ≒ R-170HS.

This relationship between weight loss percentage and molecular weight conforms to maker information (on molecular weight: R-175S << R-170S < R-170HS) and the disclosure of JP 2019-64281 A (CHALINE R-175S average molecular weight 200,000 in paragraph [0090], CHALINE R-170 average molecular weight 400,000 in paragraph [0095]).

The silicone-acrylic copolymer (B) used in the present invention preferably has a weight loss percentage at 250°C measured by thermogravimetric analysis (TGA) of 3.3% or more, more preferably 3.4% or more, and further preferably 3.5% or more. The upper limit of the weight loss percentage at 250°C is about 4.0%.

The content of the silicone-acrylic copolymer (B) is preferably 1 to 20 parts by mass, more preferably 1.5 to 15 parts by mass, and further preferably 2 to 12 parts by mass, relative to 100 parts by mass of the thermoplastic polyester-based elastomer (A).

The silicone-acrylic copolymer (B) may be used in combination with another lubricant. The silicone-acrylic copolymer (B) exhibits good compatibility with not only a resin component but also any lubricants such as an organic silicone-based lubricant, and can therefore prevent the other lubricant from causing problems such as bleed and discoloration. An excessive amount of another lubricant, however, decreases the effect of the silicone-acrylic copolymer (B). Therefore, when another lubricant is used in combination, the usage amount thereof is preferably 90 parts by mass or less, and more preferably 5 to 70 parts by mass or less, relative to 100 parts by mass of the silicone-acrylic copolymer (B). An aspect in which another lubricant is not contained is also preferred.

In the thermoplastic polyester elastomer resin composition according to the present invention, various additives can be blended according to the purpose without impairing the effects of the present invention. Examples of the additives that can be added include known hindered phenol-based, sulfur-based, phosphorus-based, or amine-based antioxidants, hindered amine-based, triazole-based, benzophenone-based, benzoate-based, nickel-based, or salicyl-based light stabilizers, antistatic agents, lubricants (lubricants other than the silicone-acrylic copolymer (B)), molecular modifiers such as a peroxide, compounds (compatibilizers) having a reactive group, such as an epoxy-based compound, an isocyanate-based compound, and a carbodiimide compound, metal deactivators, organic or inorganic nucleating agents,

neutralizing agents, antacids, antibacterial agents, fluorescent whitening agents, fillers, flame retardants, flame retardant aids, and organic or inorganic pigments. These additives can be blended in a range of 10 parts by mass or less in total relative to 100 parts by mass of the thermoplastic polyester elastomer (A). Particularly, a compatibilizer is preferably contained in order to uniformly disperse the silicone-acrylic copolymer (B) in the thermoplastic polyester elastomer (A) forming a matrix. The content of the compatibilizer is preferably 0.5 to 3 parts by mass relative to 100 parts by mass of the thermoplastic polyester elastomer (A).

As to a method of producing the thermoplastic polyester elastomer resin composition according to the present invention, the components of the thermoplastic polyester elastomer (A), the silicone-acrylic copolymer (B), and the like may be mixed at a prescribed blending ratio and then melt-kneaded. For the mixing, a Henschel mixer, a ribbon blender, a V-shaped blender, or the like can be used. For the melt kneading, a Banbury mixer, a kneading heater, a single or twin-screw melt kneading extruder, or the like can be used.

In order for the thermoplastic polyester elastomer resin composition according to the present invention to be applicable to a wide range of molding methods, the MFR (g/10 min) thereof is not particularly limited.

The molded product obtained by injection molding of the thermoplastic polyester elastomer resin composition according to the present invention has such feature that the silicone-acrylic copolymer (B) dispersed in the thermoplastic polyester elastomer (A) forming a matrix has an average dispersion area of 0.3 $\mu m^2$ or less. The method of measuring the average dispersion area of the silicone-acrylic copolymer (B) is as described later in Examples. The silicone-acrylic copolymer (B) preferably has an average dispersion area of 0.25 $\mu m^2$ or less, and more preferably has an average dispersion area of 0.2 $\mu m^2$ or less. While the lower limit of the average dispersion area of the silicone-acrylic copolymer (B) is about 0.005 $\mu m^2$, the average dispersion area is preferably 0.05 $\mu m^2$ or more in consideration of various production conditions.

The method of molding the thermoplastic polyester elastomer resin composition according to the present invention is not limited, and the thermoplastic polyester elastomer resin composition can suitably be used in injection molding, blow molding, extrusion molding, foam molding, profile molding, calender molding, and other various molding methods. Among them, injection molding is preferred.

The molded product obtained from the thermoplastic polyester elastomer resin composition as described above is also the subject of the present invention. In the molded product, the silicone-acrylic copolymer (B) dispersed in the thermoplastic polyester elastomer (A) forming a matrix has an average dispersion area of 0.3 $\mu m^2$ or less.

Since a molded product made from the thermoplastic polyester elastomer resin composition according to the present invention is made as described above, the molded product has good appearance and good abrasion resistance. Accordingly, the molded product according to the present invention can suitably be used for a repetitively abraded member such as an automobile interior part. When further having embossed surface texture, the molded product exhibits more suitable abrasion resistance.

## Examples

Hereinafter, the present invention is specifically described with reference to examples and comparative examples. The present invention, however, is obviously not limited by the following examples and can be implemented with modification along the intent described above and below, and all the modifications are encompassed in the technical scope of the present invention.

The evaluation methods are as follows.

1) Average dispersion area and number of coarse-size particles of silicone-acrylic copolymer (B): Microscope observation

Using a cryomicrotome, a sample cross-section was prepared from the vicinity of the center of a 10 mm × 10 mm molded product molded by injection molding and having a thickness of 2 mm so that a surface perpendicular to the flow direction could be observed. Next, an image of the sample cross-section was captured using Nikon industrial microscope ECLIPSE LV150N under the condition of using an objective lens with magnification of 100 times. The location for the image capturing was set at a central portion of the cross-section in the molded product where the dispersion size of the particles was stable. The captured image was subjected to image analysis with Nikon NIS-Elements BR, and the average area (average dispersion area) of the observed dispersed particles of the silicone-acrylic copolymer (B) was calculated. In this process, coarse particles described below were excluded from the area calculation.

Further, an image of the same location was captured using Nikon industrial microscope ECLIPSE LV150N under the condition of using an objective lens with magnification of 20 times. The image was enlarged into 131 mm (vertical size) x 185 mm (horizontal size). The number of coarse-size particles corresponding to dispersed particles having an area of 100 $\mu m^2$ or more was measured by visual inspection. The image-analyzed area was 0.29 $mm^2$. The number of coarse-size particles was represented by the number of the particles contained in this area.

The molded product used for the measurement was produced by performing molding using an injection molder (IS-80G-2AIS manufactured by Toshiba Machine Co., Ltd.), with the cylinder temperature set to 250°C in Example 4 and to 220°C in the other examples and comparative examples and at an injection rate of 30%.

When the particles are finely dispersed and the average dispersion area cannot be calculated by the detection method described above, the average dispersion area is calculated by the below-described higher-precision analysis method using a transmission electron microscope (TEM).

Using a cryomicrotome, a frozen section piece was prepared from the vicinity of the center of a 10 mm × 10 mm molded product molded by injection molding and having a thickness of 2 mm so that a surface perpendicular to the flow direction could be observed. The frozen section piece is stained with an electron stain (any one of ruthenium tetroxide, osmium tetroxide, and phosphotungstic acid). Next, the stained frozen section piece is observed and image-captured with transmission electron microscope JEM2100 manufactured by JEOL Ltd. under the condition of an acceleration voltage of 200 kV. The magnification in the image capturing is set to 2, 000 to 5, 000 times. The captured TEM image is binarized using ImageJ (free software developed by National Institutes of Health), and the average area (average dispersion area) of the observed dispersed particles of the silicone-acrylic copolymer (B) is obtained. In this process, the coarse particles described above are excluded from the area calculation.

2) Abrasion resistance: Thrust abrasion test

A SUS cylindrical column was put on a 10 mm x 10 mm molded product molded by injection molding under the same conditions described in 1) above and having a thickness of 2 mm, and an abrasion test was performed at an applied load of 0.37 MPa and a sliding speed of 65 rpm, and a test time of 10 min. The mass of the molded product was compared between before and after the test, and the reduced mass was defined as an abrasion amount. When the abrasion amount was less than 0.3 g, the molded product was evaluated as ◦, when the abrasion amount was 0.3 g or more and less than 0.35 g, the molded product was evaluated as Δ, and when the abrasion amount was 0.35 g or more, the molded product was evaluated as ×.

3) Whitening of appearance: Evaluation by visual inspection

A 10 mm x 10 mm molded product molded by injection molding under the same conditions described in 1) above and having a thickness of 2 mm was observed by visual inspection. When the proportion of the whitened area was less than 25%, the molded product was evaluated as ◦, when the proportion was 25% or more and less than 50%, the molded product was evaluated as Δ, and when the proportion was 50% or more, the molded product was evaluated as ×.

The raw materials used in the examples and the comparative examples are as follows.

[Thermoplastic polyester elastomer (A)]

A-1: A thermoplastic polyester elastomer (A-1) having a molar ratio between terephthalic acid, 1,4-butanediol, and polyoxytetramethylene glycol (PTMG: number average molecular weight 2000) of 100/78.8/21.2 was produced in accordance with the method described in Japanese Patent Application Laid-Open (JP-A) No. 59491/97. The content ratio of the soft segment (PTMG) was 68 mass%, and the reduced viscosity was 1.9 dl/g.
A-2: A thermoplastic polyester elastomer (A-2) having a molar ratio between 2,6-naphthalene dicarboxylic acid, 1,4-butanediol, and polyoxytetramethylene glycol (PTMG: number average molecular weight 1000) of 100/87.8/12.2 was produced in accordance with the method described in Japanese Patent Application Laid-Open (JP-A) No. 59491/97. The content ratio of the soft segment (PTMG) was 32 mass%, and the reduced viscosity was 1.3 dl/g.

The reduced viscosity was measured by dissolving 0.02 g of the thermoplastic polyester elastomer in 10 ml of a mixed solvent of phenol and tetrachloroethane (mass ratio 6/4) and using an Ubbelohde viscometer at 30°C.

[Silicone-acrylic copolymer (B)]

B-1: CHALINE R-175S, silicone/acrylic polymer = 70/30 (mass ratio), area-based average particle size: 30 μm, weight loss percentage at 250°C: 3.5%
B-2: CHALINE R-170S, silicone/acrylic polymer = 70/30 (mass ratio), area-based average particle size: 30 μm, weight

loss percentage at 250°C: 3.2%
B-3: CHALINE R-170HS, silicone/acrylic polymer = 70/30 (mass ratio), area-based average particle size: 30 μm, weight loss percentage at 250°C: 3.2%
B-4: A silicone-modified (meth)acrylic polymer A (an acrylic polymer having a polyalkylsiloxane as a side chain) described in Japanese Patent Application Laid-Open (JP-A) No. 2016-79228 was produced. Silicone/acrylic polymer = 70/30 (mass ratio), area-based average particle size: 50 μm

Thermogravimetric analysis (TGA)

The weight loss percentage at 250°C was measured using a thermogravimetric analyzer (SII EXSTAR6000, TG6200/DTA) with the sample weight set to 5 mg, under the condition of a temperature rise rate of 10°C/min between 23 to 550°C. The analyzer was set in a test chamber at 23°C and 50% RH.

[Other additives]

Ultraviolet absorber: CHISORB 234 (manufactured by BASF)
HALS (hindered amine-based light stabilizer): CHIMASORB 944 (manufactured by BASF)
Hindered phenol-based antioxidant: SONGNOX 245 (manufactured by SONGWON)
Phosphorus-based antioxidant: HOSTANOX P-EPQ (manufactured by Clariant)
Compatibilizer: BF-7M ethylene/glycidyl methacrylate/methyl acrylate copolymer (manufactured by SUMITOMO CHEMICAL COMPANY, LIMITED)

Examples 1 to 5 and Comparative Examples 1 to 4

The thermoplastic polyester elastomer (A) and the silicone-acrylic copolymer (B) were dry-blended at the blending ratio described in Table 2, melt-kneaded and extruded into a strand using a 35 mmφ twin-screw extruder (manufactured by Toshiba Machine Co., Ltd.) at a temperature setting of 200 to 220°C (240 to 250°C in Example 4), and water-cooled and formed into pellets by a pelletizer. The obtained pellets were dried under reduced pressure at 100°C for 5 hours so as to give a thermoplastic polyester elastomer resin composition. Table 2 shows the evaluation results.

[Table 2]

| | | | | Example 1 | Example 2 | Example 3 | Example 4 | Example 5 |
|---|---|---|---|---|---|---|---|---|
| blending composition | thermoplastic polyester elastomer (A) | A-1 | - | 100 | 100 | 100 | | 100 |
| | | A-2 | - | | | | 100 | |
| | silicone-acrylic copolymer (B) | B-1 | CHALINE R-175S | 3 | 5 | 10 | 5 | 5 |
| | | B-2 | CHALINE R-170S | | | | | |
| | | B-3 | CHALINE R-170HS | | | | | |
| | | B-4 | silicone-modified (meth)acrylic polymer | | | | | |
| | other additives | - | CHISORB 234 (ultraviolet absorber) | 0.5 | 0.5 | 0.5 | 0.5 | 0.5 |
| | | | CHIMASORB 944 (HALS) | 0.5 | 0.5 | 0.5 | 0.5 | 0.5 |
| | | | SONGNOX 245 (hindered phenol-based antioxidant) | 0.3 | 0.3 | 0.3 | 0.3 | 0.3 |
| | | | HOSTANOX P-EPQ (phosphorus-based antioxidant) | 0.3 | 0.3 | 0.3 | 0.3 | 0.3 |
| | | | BF-7M (compatibilizer) | 1 | 1 | 1 | 0 | 0 |
| evaluation results | average dispersion area of (B) | μm$^2$ | microscope observation | 0.15 | 0.15 | 0.18 | 0.16 | 0.17 |
| | number of coarse-size particles of (B) | particles/ 0.29 mm$^2$ | | 0 | 0 | 0 | 0 | 0 |
| | abrasion resistance | - | thrust abrasion test | ○ | ○ | ○ | ○ | ○ |
| | whitening of appearance | - | evaluation by visual inspection | ○ | ○ | ○ | ○ | ○ |

| | | | | Comparative Example 1 | Comparative Example 2 | Comparative Example 3 | Comparative Example 4 |
|---|---|---|---|---|---|---|---|
| blending composition | thermoplastic polyester elastomer (A) | A-1 | - | 100 | 100 | 100 | 100 |
| | | A-2 | - | | | | |
| | silicone-acrylic copolymer (B) | B-1 | CHALINE R-175S | | | | |
| | | B-2 | CHALINE R-170S | 5 | 10 | | |
| | | B-3 | CHALINE R-170HS | | | 5 | |
| | | B-4 | silicone-modified (meth)acrylic polymer | | | | 5 |
| | other additives | - | CHISORB 234 (ultraviolet absorber) | 0.5 | 0.5 | 0.5 | 0.5 |
| | | | CHIMASORB 944 (HALS) | 0.5 | 0.5 | 0.5 | 0.5 |
| | | | SONGNOX 245 (hindered phenol-based antioxidant) | 0.3 | 0.3 | 0.3 | 0.3 |
| | | | HOSTANOX P-EPQ (phosphorus-based antioxidant) | 0.3 | 0.3 | 0.3 | 0.3 |
| | | | BF-7M (compatibilizer) | 1 | 1 | 1 | 0 |
| evaluation results | average dispersion area of (B) | μm$^2$ | microscope observation | 0.49 | 0.51 | 0.58 | 0.50 |
| | number of coarse-size particles of (B) | particles/ 0.29 mm$^2$ | | 1 | 4 | 10 | 1 |
| | abrasion resistance | - | thrust abrasion test | ○ | ○ | △ | ○ |
| | whitening of appearance | - | evaluation by visual inspection | △ | × | △ | △ |

As is clear from the results in Table 2, the thermoplastic polyester elastomer resin compositions in Examples 1 to 5 have excellent appearance and good abrasion resistance. In Comparative Examples 1 to 4, the dispersion state of the silicone-acrylic copolymer (B) is not appropriate, and the thermoplastic polyester elastomer resin compositions are, as a result, inferior to the examples in either one of the properties.

Industrial Applicability

The thermoplastic polyester elastomer resin composition according to the present invention has really excellent appearance and abrasion resistance, and can therefore be suitably used for a repetitively abraded automobile interior member.

## Claims

1. A thermoplastic polyester elastomer resin composition comprising a thermoplastic polyester elastomer (A) and a silicone-acrylic copolymer (B); wherein the thermoplastic polyester elastomer (A) contains a hard segment and a soft segment bonded to each other, wherein the hard segment comprises a polyester formed from an aromatic dicarboxylic acid and an aliphatic and/or alicyclic diol as constituent components, wherein the soft segment is at least one member selected from the group consisting of an aliphatic polyether, an aliphatic polyester, and an aliphatic polycarbonate; and wherein, in a molded product obtained by injection molding of the thermoplastic polyester elastomer resin composition, the silicone-acrylic copolymer (B) dispersed in the thermoplastic polyester elastomer (A) forming a matrix has an average dispersion area, as determined in accordance with the method described in the description, of 0.3 $\mu m^2$ or less.

2. The thermoplastic polyester elastomer resin composition according to claim 1, wherein the silicone-acrylic copolymer (B) is a graft copolymer wherein a main skeleton is silicone and wherein an acrylic polymer is bonded to the main skeleton as a side-chain.

3. The thermoplastic polyester elastomer resin composition according to claim 1 or 2, wherein the silicone-acrylic copolymer (B) has a weight loss percentage at 250°C measured by thermogravimetric analysis (TGA) of 3.3% or more.

4. A molded product obtained from the thermoplastic polyester elastomer resin composition comprising a thermoplastic

polyester elastomer (A) and a silicone-acrylic copolymer (B); wherein the thermoplastic polyester elastomer (A) contains a hard segment and a soft segment bonded to each other, wherein the hard segment comprises a polyester formed from an aromatic dicarboxylic acid and an aliphatic and/or alicyclic diol as constituent components, wherein the soft segment is at least one member selected from the group consisting of an aliphatic polyether, an aliphatic polyester, and an aliphatic polycarbonate; and wherein, in the molded product, the silicone-acrylic copolymer (B) dispersed in the thermoplastic polyester elastomer (A) forming a matrix has an average dispersion area, as determined in accordance with the method described in the description, of 0.3 $\mu m^2$ or less.

## Patentansprüche

**1.** Thermoplastische Polyesterelastomer-Harzzusammensetzung, umfassend ein thermoplastisches Polyesterelastomer (A) und ein Silikon-Acrylcopolymer (B); wobei das thermoplastische Polyesterelastomer (A) ein Hartsegment und ein Weichsegment, die miteinander verbunden sind, enthält, wobei das Hartsegment einen Polyester, der aus einer aromatischen Dicarbonsäure und einem aliphatischen und/oder alizyklischen Diol als Bestandteile gebildet ist, umfasst, wobei das Weichsegment mindestens ein Mitglied, ausgewählt aus der Gruppe, bestehend aus einem aliphatischen Polyether, einem aliphatischen Polyester, und einem aliphatischen Polycarbonat, ist; und wobei in einem durch Spritzgießen der thermoplastischen Polyesterelastomer-Harzzusammensetzung erhaltenen Formprodukt das in dem thermoplastischen Polyesterelastomer (A), das eine Matrix bildet, dispergierte Silikon-Acrylcopolymer (B) eine durchschnittliche Dispersionsfläche, bestimmt in Übereinstimmung mit dem in der Beschreibung beschriebenen Verfahren, von 0,3 $\mu m^2$ oder weniger aufweist.

**2.** Thermoplastische Polyesterelastomer-Harzzusammensetzung nach Anspruch 1, wobei das Silikon-Acrylcopolymer (B) ein Pfropfcopolymer ist, wobei ein Hauptgerüst Silikon ist und wobei ein Acrylpolymer als eine Seitenkette an das Hauptgerüst gebunden ist.

**3.** Thermoplastische Polyesterelastomer-Harzzusammensetzung nach Anspruch 1 oder 2, wobei das Silikon-Acrylcopolymer (B) einen Gewichtsverlustanteil bei 250 °C, gemessen durch thermogravimetrische Analyse (TGA), von 3,3 % oder mehr aufweist.

**4.** Formprodukt, das aus der thermoplastischen Polyesterelastomer-Harzzusammensetzung, umfassend ein thermoplastisches Polyesterelastomer (A) und ein Silikon-Acrylcopolymer (B), erhalten wird; wobei das thermoplastische Polyesterelastomer (A) ein Hartsegment und ein Weichsegment, die miteinander verbunden sind, enthält, wobei das Hartsegment einen Polyester, der aus einer aromatischen Dicarbonsäure und einem aliphatischen und/oder alizyklischen Diol als Bestandteile gebildet ist, umfasst, wobei das Weichsegment mindestens ein Mitglied, ausgewählt aus der Gruppe, bestehend aus einem aliphatischen Polyether, einem aliphatischen Polyester, und einem aliphatischen Polycarbonat, ist; und wobei in dem Formprodukt das in dem thermoplastischen Polyesterelastomer (A), das eine Matrix bildet, dispergierte Silikon-Acrylcopolymer (B) eine durchschnittliche Dispersionsfläche, bestimmt in Übereinstimmung mit dem in der Beschreibung beschriebenen Verfahren, von 0,3 $\mu m^2$ oder weniger aufweist.

## Revendications

**1.** Composition de résine élastomère de polyester thermoplastique comprenant un élastomère de polyester thermoplastique (A) et un copolymère de silicone-acrylique (B) ; dans laquelle l'élastomère de polyester thermoplastique (A) contient un segment dur et un segment mou liés l'un à l'autre, dans laquelle le segment dur comprend un polyester formé d'un acide dicarboxylique aromatique et d'un diol aliphatique et/ou alicyclique en tant que composants constitutifs, dans laquelle le segment mou est au moins un élément sélectionné parmi le groupe constitué d'un polyéther aliphatique, d'un polyester aliphatique et d'un polycarbonate aliphatique ; et dans laquelle, dans un produit moulé obtenu par moulage par injection de la composition de résine élastomère de polyester thermoplastique, le copolymère de silicone-acrylique (B) dispersé dans l'élastomère de polyester thermoplastique (A) formant une matrice a une surface de dispersion moyenne, telle que déterminée conformément au procédé décrit dans la description, de 0,3 $\mu m^2$ ou moins.

**2.** Composition de résine élastomère de polyester thermoplastique selon la revendication 1, dans laquelle le copolymère de silicone-acrylique (B) est un copolymère greffé dans lequel un squelette principal est de la silicone et dans lequel un polymère acrylique est lié au squelette principal en tant que chaîne latérale.

**3.** Composition de résine élastomère de polyester thermoplastique selon la revendication 1 ou 2, dans laquelle le copolymère de silicone-acrylique (B) a un pourcentage de perte pondérale à 250 °C mesuré par analyse thermogravimétrique (TGA) de 3,3 % ou plus.

**4.** Produit moulé obtenu à partir de la composition de résine élastomère de polyester thermoplastique comprenant un élastomère de polyester thermoplastique (A) et un copolymère de silicone-acrylique (B) ; dans lequel l'élastomère de polyester thermoplastique (A) contient un segment dur et un segment mou liés l'un à l'autre, dans lequel le segment dur comprend un polyester formé d'un acide dicarboxylique aromatique et d'un diol aliphatique et/ou alicyclique en tant que composants constitutifs, dans lequel le segment mou est au moins un élément sélectionné parmi le groupe constitué d'un polyéther aliphatique, d'un polyester aliphatique et d'un polycarbonate aliphatique ; et dans lequel, dans le produit moulé, le copolymère de silicone-acrylique (B) dispersé dans l'élastomère de polyester thermoplastique (A) formant une matrice a une surface de dispersion moyenne, telle que déterminée conformément au procédé décrit dans la description, de 0,3 $\mu m^2$ ou moins.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2016079228 A
- JP 2019064281 A
- JP 9059491 A